# FASCICULE DE BREVET EUROPEEN

(11) **EP 2 681 489 B1**
(45) Date de publication et mention de la délivrance du brevet: **23.08.2017**
(21) Numéro de dépôt: 12707748.5
(22) Date de dépôt: 05.03.2012
(51) Int. Cl.: F22B 1/02, F22B 37/00, F22B 37/58, G21C 17/017

(54) **PROCÉDÉ DE RÉPARATION D'UN PRESSURISEUR ET OUTILLAGE POUR LA MISE EN OEUVRE DU PROCÉDÉ**
VERFAHREN ZUR REPARATUR EINES DRUCKHALTERS UND VORRICHTUNG ZUR UMSETZUNG DES VERFAHRENS
METHOD FOR REPAIRING A PRESSURIZER, AND EQUIPMENT FOR IMPLEMENTING THE METHOD

(30) Priorité: 04.03.2011 FR 1151796
(43) Date de publication de la demande: 08.01.2014
(73) Titulaire: AREVA NP, 92400 Courbevoie (FR)
(72) Inventeur: AMBACHER, Jérôme, F-71620 Bey (FR); MASSAZZA, Brice, F-71100 Chalon-sur-Saône (FR); POLLIER, Denis, F-71530 Champforgeuil (FR)
(74) Mandataire: Lavoix
(86) Numéro de dépôt international: PCT/EP2012/053745
(87) Numéro de publication internationale: WO 2012/119982

(56) Documents cités:
- EP-A1- 0 475 799
- DE-A1- 3 310 387
- FR-A1- 2 938 964
- FR-A1- 2 947 662
- US-B1- 7 093 360

## Description

La présente invention concerne un procédé d'intervention sur un élément chauffant défectueux d'un pressuriseur comprenant un réservoir allongé suivant un axe longitudinal et des éléments chauffants allongés s'étendant à l'intérieur du réservoir, et au moins une plaque-entretoise traversée par les éléments chauffants et propre à maintenir un écartement transversal entre les éléments chauffants.

Les réacteurs nucléaires à eau sous pression comportent un circuit primaire de circulation de l'eau de refroidissement du réacteur et un pressuriseur disposé sur une branche du circuit primaire pour maintenir la pression de l'eau dans le circuit primaire entre certaines limites déterminées. Le pressuriseur a également pour fonction de compenser des variations de volume de l'eau dans le circuit primaire pendant le fonctionnement du réacteur.

Le pressuriseur comprend un réservoir d'eau, des éléments chauffant allongés ou « cannes chauffantes », s'étendant dans une partie inférieure du réservoir, et une buse d'aspersion pour asperger de l'eau froide en partie supérieure du réservoir. Le pressuriseur comprend de l'eau dans sa partie inférieure reliée au circuit primaire et une bulle de vapeur dans sa partie supérieure. Le contrôle de la pression de l'eau se fait en évaporant l'eau à l'aide des cannes chauffantes et en condensant la vapeur par aspersion pour contrôler le volume et la pression de la bulle de vapeur.

Le réservoir est allongé suivant un axe longitudinal, orienté verticalement. Les cannes chauffantes traversent une paroi inférieure du réservoir et s'étendent à l'intérieur du réservoir parallèlement à l'axe longitudinal.

Le pressuriseur comprend au moins une plaque-entretoise, généralement deux plaques-entretoises pour maintenir les cannes chauffantes transversalement. Chaque plaque-entretoise est fixée à l'intérieur du réservoir.

En service, une canne chauffante peut devenir défectueuse, si bien qu'il est nécessaire de procéder à son extraction et éventuellement à son remplacement.

Pour extraire une canne chauffante, il est normalement prévu d'exercer une traction sur la canne chauffante vers le bas pour l'extraire au travers de la paroi inférieure.

Néanmoins, il existe des cas dans lesquels la canne chauffante défectueuse présente un tronçon déformé rendant impossible son extraction au travers de la paroi inférieure du réservoir par traction vers le bas. Les documents FR 2 666 679 et FR 2 947 662 divulguent un procédé d'extraction d'une canne chauffante défectueuse présentant un renflement, dans lequel on tronçonne la canne chauffante puis on extrait les tronçons de la canne chauffante au travers d'une ouverture de visite prévue dans une paroi supérieure du réservoir.

Néanmoins, ce procédé présente de nombreux inconvénients qui rendent sa mise en oeuvre longue, délicate et risquée.

Du fait de la géométrie de la ou des plaques entretoises, l'accessibilité des dispositifs robotisés et leur manutention sans visibilité directe est très difficile, de même que l'extraction des tronçons de cannes chauffantes. Il y a un risque de création de débris difficiles à récupérer, ainsi que de perte du robot et d'endommagement des cannes adjacentes. Par ailleurs ce procédé ne permet pas une restauration de l'état de surface des orifices de passage des cannes chauffantes dans la ou les plaques entretoises, ce qui interdit le remplacement ultérieur des cannes chauffantes endommagées par des cannes neuves.

Un but de l'invention est de proposer un procédé d'intervention permettant l'extraction de cannes chauffantes défectueuses présentant des détériorations importantes, quelle que soit la localisation de la canne dans le pressuriseur, sans risque pour les cannes adjacentes, et avec possibilité de remplacer la canne extraite par une canne neuve.

A cet effet l'invention propose un procédé dans lequel on découpe au moins une plaque-entretoise autour de l'élément chauffant de manière à désolidariser cet élément chauffant de ladite plaque-entretoise, puis on extrait l'élément chauffant du réservoir.

Selon d'autres modes de mis en oeuvre, le procédé comprend une ou plusieurs des caractéristiques suivantes, prise(s) isolément ou selon toutes les combinaisons techniquement possibles :
- on extrait l'élément chauffant en une pièce ;
- on extrait l'élément chauffant en tirant sur une portion d'extrémité supérieure de l'élément chauffant et/ou en poussant sur une portion d'extrémité inférieure de l'élément chauffant, de préférence une portion d'extrémité inférieure s'étendant au travers d'une paroi du réservoir et à l'extérieur du réservoir ;
- on découpe la ou chaque plaque-entretoise à l'aide d'un outil de découpe par électroérosion comprenant une tête d'électroérosion et une électrode d'électroérosion ;
- on enfile l'électrode autour de l'élément chauffant et on descend l'électrode de manière à découper la ou chaque plaque-entretoise autour de l'élément chauffant ;
- on fixe l'outil de découpe sur une plaque-entretoise en positionnant l'outil de découpe en utilisant comme points des références des éléments chauffants adjacents à l'élément chauffant à extraire et/ou des orifices de circulation d'eau pour la circulation d'eau au travers de la ou chaque plaque-entretoise ;
- l'électrode est tubulaire ;
- on désolidarise l'élément chauffant d'une manchette de passage de l'élément chauffant au travers d'une paroi du réservoir à l'extérieur du réservoir ;
- on place un élément chauffant de remplacement à l'emplacement de l'élément chauffant extrait ;
- on fixe l'élément chauffant à ladite plaque entretoise à l'aide d'une morceau de plaque rapporté et fixé sur la plaque-entretoise et comprenant un orifice de passage de l'élément chauffant de remplacement ;
- on positionne le morceau de plaque en utilisant comme points de référence des éléments chauffants adjacents à l'élément chauffant de remplacement, et/ou des orifices de circulation d'eau au travers de la ou chaque plaque-entretoise ;
- on dispose l'élément chauffant extrait dans un conteneur de manutention à l'intérieur du réservoir avant d'extraire l'élément chauffant du réservoir.

L'invention concerne également un outillage d'extraction d'un élément chauffant d'un pressuriseur maintenu dans un réservoir du pressuriseur par au moins une plaque-entretoise, comprenant un outil de découpe par électroérosion comportant un châssis de support et une électrode d'électroérosion tubulaire portée par un porte-électrode monté coulissant sur le châssis de support.

Selon d'autres modes de réalisation, l'outillage comprend une ou plusieurs des caractéristiques suivantes, prise(s) isolément ou selon toute les combinaisons techniquement possibles :
- un dispositif de saisie propre à saisir un élément chauffant s'étendant à l'intérieur du porte-électrode ;
- une embase de positionnement et de fixation de l'outil de découpe sur une plaque-entretoise, permettant de positionner l'outil de découpe en utilisant comme points de références des éléments chauffants adjacents à l'élément chauffant endommagé et/ou des orifices de circulation d'eau au travers de la plaque-entretoise ;
- un organe de fixation pour la fixation de l'outil de découpe sur une plaque-entretoise, l'organe de fixation comprenant un corps prévu pour être inséré dans des orifices alignés de deux pièces, une collerette d'appui et un doigt de serrage rétractable mobile entre une position rentrée à l'intérieur du corps et une position sortie en saillie à l'extérieur du corps sous l'effet d'un élément de serrage de manière à serrer les pièces traversées par le corps entre la collerette et le doigt de serrage.

L'invention et ses avantages seront mieux compris à la lecture de la description qui va suivre, donnée uniquement à titre d'exemple, et faite en référence aux dessins annexés, sur lesquels :
- la figure 1 est une vue en coupe par un plan vertical d'un pressuriseur de réacteur nucléaire à eau sous pression ;
- les figures 2 et 3 sont des vues analogues à celle de la figure 1, illustrant la partie basse du pressuriseur lors d'étapes d'extraction d'une canne chauffante défectueuse conformément au procédé de l'invention ;
- la figure 4 est une vue schématique partielle en coupe d'une embase de positionnement d'un outillage de découpe fixé sur une plaque-entretoise supérieure du pressuriseur ;
- la figure 5 est une vue partielle en coupe du pressuriseur illustrant une étape de remplacement de la canne chauffante défectueuse par une canne chauffante de remplacement.

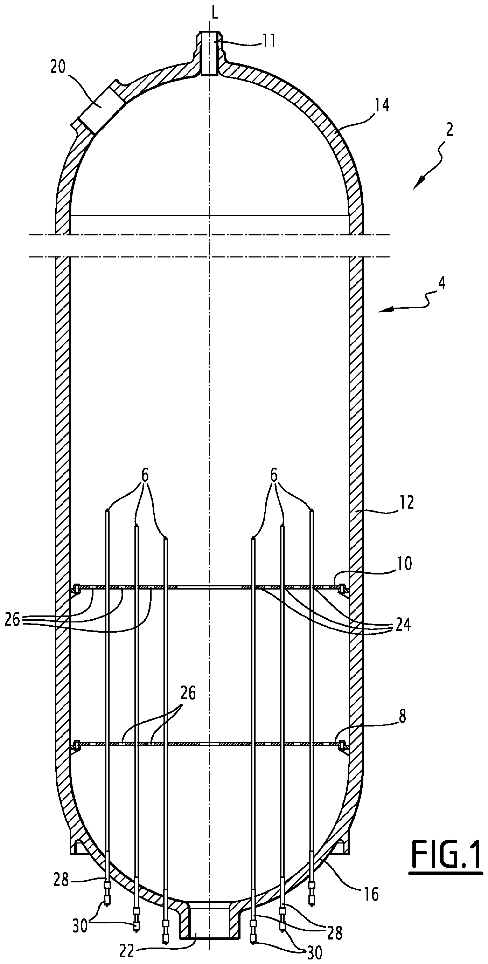

Le pressuriseur 2 illustré sur la figure 1 comprend un réservoir 4, des éléments chauffants allongés ou cannes chauffantes 6 s'étendant à l'intérieur du réservoir 4, une plaque-entretoise inférieure 8 et une plaque-entretoise supérieure 10 de maintien des cannes chauffantes 6 à l'intérieur du réservoir 4 et une buse d'aspersion 11.

Le réservoir 4 est allongé suivant un axe longitudinal L, orienté verticalement. Le réservoir comprend une virole 12 tubulaire cylindrique s'étendant suivant l'axe longitudinal L, fermée à ses extrémités axiales par une paroi supérieure 14 bombée et une paroi inférieure 16 bombée.

La paroi supérieure 14 est traversée par une ouverture de visite 20 permettant d'accéder à l'intérieur du réservoir 4. La buse d'aspersion11 est fixée sur la paroi supérieure 14 de façon à asperger de l'eau vers le bas.

La paroi inférieure 16 est traversée par une ouverture de circulation d'eau 22 permettant de raccorder fluidiquement le réservoir 4 au circuit primaire du réacteur nucléaire.

Les cannes chauffantes 6 traversent la paroi inférieure 16 et s'étendent dans une partie inférieure du réservoir 4. Les cannes chauffantes 6 sont allongées et s'étendent parallèlement les unes aux autres et à l'axe longitudinal L. Les cannes chauffantes 6 sont réparties autour de l'axe longitudinal L suivant plusieurs rangées circulaires concentriques, ici trois rangées.

La plaque-entretoise inférieure 8 et la plaque-entretoise supérieure 10 maintiennent les cannes chauffantes 6 transversalement à l'intérieur du réservoir 4. Chaque canne chauffante 6 traverse la plaque-entretoise inférieure 8 et la plaque-entretoise supérieure 10. La plaque-entretoise inférieure 8 et la plaque-entretoise supérieure 10 sont chacune fixées à leur périphérie au réservoir 4.

La plaque-entretoise inférieure 8 et la plaque-entretoise supérieure 10 sont espacées suivant l'axe longitudinal. La plaque entretoise inférieure 8 présente la forme d'un disque. La plaque-entretoise supérieure 10 est annulaire et comprend une ouverture centrale de grand diamètre.

La plaque-entretoise inférieure 8 et la plaque-entretoise supérieure 10 comprennent chacune des orifices de cannes chauffantes 24 au travers desquels s'étendent les cannes chauffantes 6 et des ouvertures de circulation d'eau 26 pour la circulation d'eau au travers de la plaque-entretoise inférieure 8 et de la plaque-entretoise supérieure 10.

Le réservoir 4 comprend des manchettes tubulaires 28 traversant la paroi inférieure 16. Chaque manchette 28 est soudée à la paroi inférieure 16 de manière étanche. Chaque canne chauffante 6 s'étend au travers d'une manchette 28 respective. Chaque canne chauffante 6 est soudée à la manchette associée de manière étanche.

Les cannes chauffantes 6 sont par exemple des cannes chauffantes électriques. Chaque canne chauffante 6 comprend une gaine et des éléments dissipateurs de chaleur conducteurs électriquement s'étendant à l'intérieur de la gaine chauffante. Chaque canne chauffante 6 comprend à son extrémité située à l'extérieur du réservoir 4 un connecteur 30 électrique de raccordement à une alimentation électrique.

Une canne chauffante 6 peut devenir défectueuse de sorte qu'il devient nécessaire de procéder à son extraction et éventuellement à son remplacement.

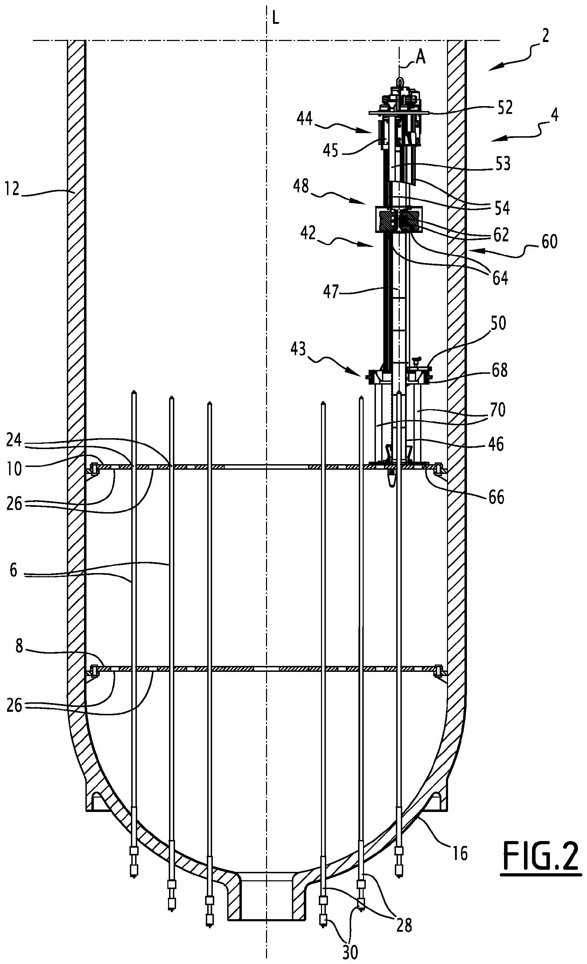

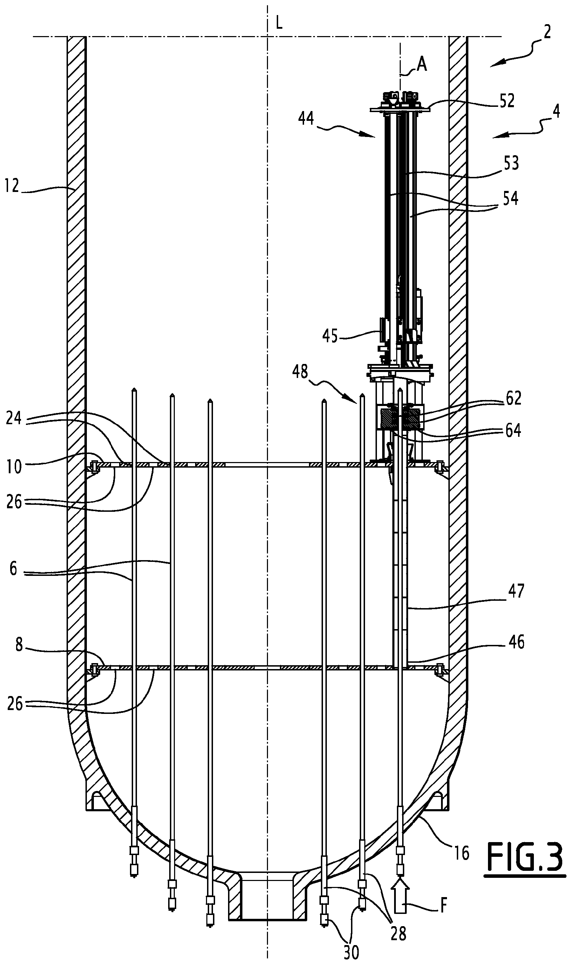

Les figures 2 et 3 illustrent des étapes d'extraction d'une canne chauffante 6 défectueuse selon un procédé conforme à l'invention.

Selon le procédé de l'invention, on découpe au moins une plaque-entretoise autour de la canne chauffante 6 défectueuse de manière à désolidariser la canne chauffante 6 défectueuse de la ou chaque plaque-entretoise découpée (figures 2 et 3).

Par ailleurs, on désolidarise la canne chauffante 6 défectueuse de la paroi inférieure 16.

Pour ce faire, on désolidarise l'extrémité inférieure de la canne chauffante 6 défectueuse sortant de la manchette 28 à l'extérieur du réservoir 4, de façon à permettre le coulissement de la canne chauffante 6 défectueuse dans la manchette 28 vers l'intérieur du réservoir 4.

Ensuite, on extrait la canne chauffante 6 défectueuse, en exerçant une traction vers le haut sur la portion d'extrémité supérieure de la canne chauffante et, si cela est nécessaire, une poussée sur la portion d'extrémité inférieure de la canne chauffante 6 défectueuse faisant saillie à l'extérieur du réservoir 4 (Flèche F sur la figure 3), de manière à soulever la canne chauffante 6 défectueuse vers l'intérieur du réservoir.

Ensuite, on sort la canne chauffante 6 défectueuse du réservoir 4 par l'ouverture de visite 20, la canne chauffante 6 défectueuse ayant de préférence préalablement été disposée dans un conteneur de confinement, étant donné que la canne chauffante 6 défectueuse est contaminée et susceptible de ne plus être intègre.

Selon l'invention, on découpe au moins les plaques-entretoises situées au-dessus du tronçon déformé de la canne chauffante défectueuse, du fait que le tronçon déformé empêche le coulissement de la canne chauffante 6 défectueuse au travers des plaques-entretoises situées au-dessus.

Selon les cas, il est possible de ne pas découper toutes les plaques-entretoises. Si le tronçon déformé se situe au-dessous de la plaque-entretoise la plus inférieure, on découpe toutes les plaques-entretoises. Si le tronçon déformé se situe entre deux plaques-entretoises et que la canne chauffante 6 défectueuse peut coulisser au travers de la ou chaque plaque entretoise située au-dessous du tronçon déformé, on ne découpe que les plaques-entretoises située au-dessus du tronçon déformé, ou toutes les plaques-entretoises.

Le procédé de l'invention peut être mis en oeuvre sur toute canne chauffante défectueuse, y compris une canne chauffante ne présentant pas de déformation apparente, mais dont l'extraction s'avère difficile ou impossible par traction vers le bas, du fait de frottement trop élevé entre la canne chauffante et les plaques-entretoises et/ou la manchette 28.

Un outillage 40 d'extraction de cannes chauffantes est illustré sur les figures 2 à 4.

Tel qu'illustré sur les figures 2 et 3, l'outillage 40 comprend un outil de découpage 42 et une embase 43 de fixation de l'outil de découpage 42 sur la plaque-entretoise supérieure 10.

L'outil de découpage 42 comprend un châssis de support 44, une tête d'électroérosion 45 montée coulissant sur le châssis de support 44 suivant un axe de coulissement A, une électrode d'électroérosion 46 portée par un porte-électrode 47 fixé sur la tête d'électroérosion 45, et un dispositif de saisie 48 propre à saisir l'extrémité supérieur d'une canne chauffante 6 pour la tirer vers le haut avec l'outil de découpage 42.

Le châssis de support 44 et la tête d'électroérosion 45 sont représentés partiellement écorchés sur les figures 2 et 3, tandis que l'embase 43, l'électrode 46, le porte électrode 47 et le dispositif de saisie 48 sont représentés en coupe à des fins d'illustration.

Le châssis de support 44 comprend un embout inférieur 50 et un embout supérieur 52 espacé suivant l'axe de coulissement A et reliés par des montants (non représentés). L'embout inférieur 50 est annulaire.

Le châssis de support 44 comprend des rails de coulissement 54 s'étendant entre l'embout supérieur et l'embout inférieur 52 suivant l'axe de coulissement. La tête d'électroérosion 45 est montée coulissante sur les rails de coulissement 54.

L'électrode 46 est tubulaire et circulaire centrée sur l'axe de coulissement A. Elle présente une arête de découpe circulaire. L'électrode 46 est alimentée en électricité par la tête d'électroérosion 45.

Le porte-électrode 47 est tubulaire s'étendant suivant l'axe de coulissement A. L'électrode est fixée à l'extrémité inférieure du porte-électrode 47. L'autre extrémité supérieure du porte-électrode 47 est reliée à la tête d'électroérosion.

Lors du déplacement de la tête d'électroérosion 45, l'électrode 46 et le porte-électrode 47 coulissent au travers de l'embout inférieur 50.

Le dispositif de saisie 48 est disposé sur le porte-électrode 47, à distance de l'électrode 46 et à proximité de la tête d'électroérosion 45. Il comprend une mâchoire 60 comprenant des éléments de serrage 62 mobile radialement sous l'effet d'actionneurs 64 vers le centre du tube de support 54 pour serrer l'extrémité d'une canne chauffante 6 s'étendant dans porte-électrode 47. La mâchoire 60 comprend ici deux éléments de serrage 62 diamétralement opposés.

L'embase 43 est propre à être posée et fixée sur la plaque-entretoise supérieure 10 en étant positionnée par rapport à la canne chauffante 6 défectueuse et en prenant appui sur la plaque-entretoise supérieure 10 entre les cannes chauffantes 6 adjacentes.

L'embase 43 est propre à recevoir l'outil de découpe 42 en appui sur l'embase 43. L'embase 43 présente un passage central permettant le déplacement du porte-électrode 47 au travers de l'embase 43.

L'embase 43 comprend une plaque d'appui 66 inférieure, un siège 68 supérieur annulaire, et des montants 70 s'étendant entre la plaque inférieure 66 et le siège supérieur 68.

Le siège supérieur 68 est prévu pour servir d'appui à l'embout inférieur 50 de l'outil de découpage 42. Le siège supérieur 68 et l'embout inférieur 50 sont prévus pour venir en appui l'un sur l'autre par des portées coniques correspondantes permettant le centrage de l'outil de découpage 42. L'embout inférieur 50 comprend des moyens de fixation sur le siège supérieur 68, par exemple des vis de serrage.

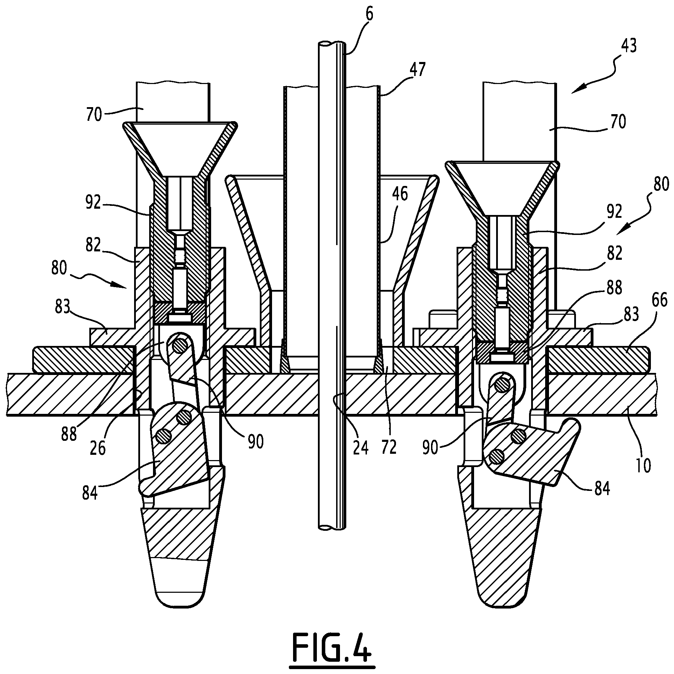

Tel qu'illustré sur la figure 4 qui représente la partie inférieur de l'embase 43 en coupe dans un plan de coupe différent de celui des figures 2 et 3, la plaque d'appui 66 comprend un orifice central 72 pour le passage de la portion d'extrémité supérieure de la canne chauffante 6 défectueuse.

Les cannes chauffantes étant proches les unes des autres, la plaque d'appuis 66 comprend également des orifices pour le passage des cannes adjacentes à la canne déposée.

Les montants 70 présentent une hauteur supérieure à celle des portions d'extrémité des cannes chauffantes 6 faisant saillie au-dessus de la plaque-entretoise supérieure 10. Le siège supérieur 68 se situe donc au-dessus des extrémités supérieures des cannes chauffantes 6.

La plaque d'appui 66 comprend des organes de fixation 80 prévus pour s'engager chacun dans une ouverture de circulation d'eau 26 respective de la plaque-entretoise supérieure 10 pour positionner la plaque d'appui 66 par rapport à la canne chauffante 6 défectueuse et la fixer sur la plaque-entretoise supérieure 10.

Chaque organe de fixation 80 comprend un corps tubulaire 82 possédant une collerette d'appui 83 en saillie radialement vers l'extérieur, un doigt de serrage 84 basculant monté rotatif à l'intérieur du corps tubulaire 82 et mobile au travers d'une fenêtre latérale du corps tubulaire 82 entre position rentrée à l'intérieur du corps tubulaire 82 (à gauche sur la figure 4) et une position sortie en en saillie à l'extérieur du corps tubulaire 82 (à droite sur la figure 4).

Chaque organe de fixation 80 est disposé dans un orifice de la plaque d'appui 66 avec sa collerette d'appui 83 en appui sur une face supérieure de la plaque d'appui 66 à la périphérie de l'orifice. La collerette d'appui 83 est fixée sur la plaque d'appui 66, par exemple à l'aide de vis.

Chaque organe de fixation 80 comprend un mécanisme d'actionnement 86 du doigt de serrage 84. Le mécanisme d'actionnement 86 comprend un élément de commande 88 monté coulissant à l'intérieur du corps tubulaire 82 et une bielle 90 reliant l'élément de commande 88 et le doigt de serrage 84 de telle sorte que le déplacement axial de l'élément de commande 88 provoque la rotation du doigt de serrage 84. Le mécanisme d'actionnement 86 comprend une vis de serrage 92 vissée dans un tronçon taraudé du corps tubulaire 82 et venant en appui sur l'élément de commande 88, de telle sorte que le vissage la vis de serrage 92 déplace l'élément de commande 88 de manière à déplacer le doigt de serrage 84 en position sortie.

Le vissage de la vis de serrage 92 permet d'appliquer le doigt de serrage 84 conte la surface inférieure de la plaque entretoise supérieure 10, de sorte que la plaque d'appui 66 et la plaque-entretoise supérieure 10 sont serrée l'une contre l'autre entre la collerette d'appui 83 et le doigt de serrage 84.

En fonctionnement, l'embase 43 est posée sur la plaque-entretoise supérieure 10 de telle manière que chaque organe de fixation 80 s'insère dans un orifice de circulation d'eau 26 de la plaque-entretoise supérieure 10. Chaque organe de fixation 80 est actionné de manière à fixer la plaque d'appui 66 contre la plaque-entretoise supérieure 10.

L'outil de découpage 42 est ensuite posé et fixé sur l'embase 43 (figure 2). Ensuite, le porte-électrode 47 est déplacé vers le bas de manière à découper la plaque-entretoise supérieure 10 puis la plaque-entretoise inférieure (figure 3).

L'électrode 46 tubulaire circulaire permet de réaliser la découpe en une seule passe. En variante, l'électrode 46 possède une arête de découpe s'étendant suivant un arc de cercle ou deux arcs de cercle diamétralement opposés. Dans ce cas, la découpe d'une plaque-entretoise est effectuée en plusieurs passes, en faisant pivoter l'électrode entre chaque passe autour de l'axe de coulissement A. De manière générale, on découpe la ou chaque plaque-entretoise 8, 10 suivant une ligne, de manière continue en une seule passe ou de manière discontinue en plusieurs passe.

Une fois le canne chauffante 6 libérée de chaque plaque-entretoise 8, 10, le dispositif de saisie 48 est ensuite actionné de manière à saisir la canne chauffante 6 défectueuse, et le porte-électrode 47 est remonté de manière a exercer une traction vers le haut sur la canne chauffante 6 défectueuse.

Selon le procédé de l'invention, si la manchette 28 de la canne chauffante 6 défectueuse extraite est réutilisable, une canne chauffante de remplacement est fixée à l'emplacement de la canne chauffante 6 défectueuse extraite.

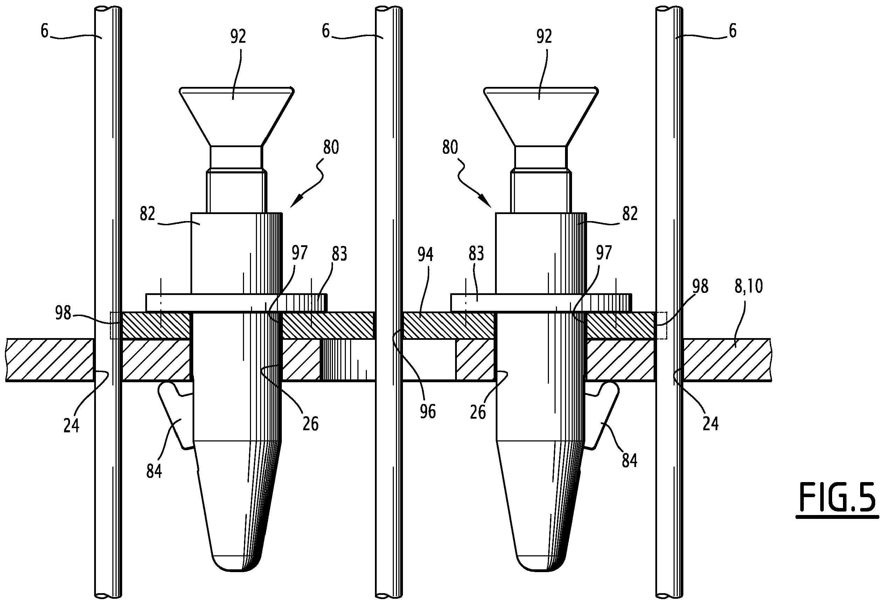

Pour ce faire, tel qu'illustré sur la figure 5, on rapporte un morceau de plaque 94 sur la plaque entretoise. Le morceau de plaque 94 comprend un orifice de canne chauffante 96 pour le passage de la canne chauffante 6 de remplacement.

Selon le procédé, on positionne le morceau de plaque 94 en utilisant comme points de référence les ouvertures de circulation d'eau 26 de la plaque-entretoise 8, 10 et/ou les cannes -chauffantes 6 adjacentes.

Le morceau de plaque 94 comprend des orifices de fixation 97 destinés à être en regard d'ouverture de circulation d'eau 26 de la plaque-entretoise 8, 10, pour l'insertion d'organe de fixation 80 identique à ceux décrit en référence à la figure 5.

Le morceau de plaque 94 comprend des encoches 98 de positionnement, propre à recevoir des cannes chauffante 6 adjacentes à la canne chauffante 6 de remplacement.

Ensuite, on insère la canne chauffante 6 de remplacement au travers de la manchette 28, et au travers de l'orifice de canne chauffante 98 du morceau de plaque 94.

Grâce à l'invention, il est possible d'extraire facilement une canne chauffante défectueuse sans avoir à tronçonner la canne chauffante à l'intérieur du pressuriseur pour l'extraire des plaques-entretoises et l'extraire du pressuriseur. Il permet l'extraction d'un canne chauffante présentant des déformations importantes, rendant difficile le tronçonnage de la canne chauffante. Si la canne chauffante est éclatée, le tronçonnage de la canne chauffante pourrait par exemple générer de nombreux débris susceptibles de se propager dans le circuit primaire et d'endommager d'autres éléments du réacteur nucléaire, tels que les assemblages de combustible nucléaire. Il est possible de procéder facilement au remplacement d'une canne chauffante défectueuse par une canne chauffante de remplacement. L'outillage d'extraction selon l'invention est simple et permet une mise en oeuvre maîtrisée ne présentant pas de risques pour l'intégrité du pressuriseur et le redémarrage de l'installation.

## Revendications

1. Procédé d'intervention sur un élément chauffant (6) défectueux d'un pressuriseur (2) comprenant un réservoir (4) allongé suivant un axe longitudinal (L) et des éléments chauffants (6) allongés s'étendant à l'intérieur du réservoir (4), et au moins une plaque-entretoise (8, 10) traversée par les éléments chauffants (6) et propre à maintenir un écartement transversal entre les éléments chauffants (6), **caractérisé en ce qu'**on découpe au moins une plaque-entretoise (8, 10) autour de l'élément chauffant (6) de manière à désolidariser cet élément chauffant (6) de ladite plaque-entretoise (8, 10), puis on extrait l'élément chauffant (6) du réservoir (4).

2. Procédé selon la revendication 1, dans lequel on extrait l'élément chauffant en une pièce.

3. Procédé selon la revendication 1 ou 2, dans lequel on extrait l'élément chauffant (6) en tirant sur une portion d'extrémité supérieure de l'élément chauffant (6) et/ou en poussant sur une portion d'extrémité inférieure de l'élément chauffant (6), de préférence une portion d'extrémité inférieure s'étendant au travers d'une paroi du réservoir (4) et à l'extérieur du réservoir (4).

4. Procédé selon l'une quelconque des revendications 1 à 3, dans lequel on découpe la ou chaque plaque-entretoise (8, 10) à l'aide d'un outil de découpe (42) par électroérosion comprenant une tête d'électroérosion (45) et une électrode (46) d'électroérosion.

5. Procédé selon la revendication 4, dans lequel on enfile l'électrode (46) autour de l'élément chauffant (6) et on descend l'électrode (46) de manière à découper la ou chaque plaque-entretoise autour de l'élément chauffant (6).

6. Procédé selon la revendication 4 ou 5, dans lequel on fixe l'outil de découpe (42) sur une plaque-entretoise (10) en positionnant l'outil de découpe (42) en utilisant comme points des références des éléments chauffants adjacents à l'élément chauffant (6) à extraire et/ou des orifices de circulation d'eau (26) pour la circulation d'eau au travers de la ou chaque plaque-entretoise (8, 10).

7. Procédé selon l'une quelconque des revendications 4 à 6, dans lequel l'électrode (46) est tubulaire.

8. Procédé selon l'une quelconque des revendications précédentes, dans lequel on désolidarise l'élément chauffant (6) d'une manchette de passage de l'élément chauffant au travers d'une paroi du réservoir (4) à l'extérieur du réservoir (4).

9. Procédé selon l'une quelconque des revendications précédentes, dans lequel on place un élément chauffant (6) de remplacement à l'emplacement de l'élément chauffant (6) extrait.

10. Procédé selon la revendication 9, dans lequel on fixe l'élément chauffant à ladite plaque entretoise à l'aide d'un morceau de plaque rapporté et fixé sur la plaque-entretoise et comprenant un orifice de passage de l'élément chauffant de remplacement.

11. Procédé selon la revendication 10, dans lequel on positionne le morceau de plaque (94) en utilisant comme points de référence des éléments chauffants (6) adjacents à l'élément chauffant (6) de remplacement, et/ou des orifices de circulation d'eau au travers de la ou chaque plaque-entretoise (8, 10).

12. Procédé selon l'une quelconque des revendications précédentes, dans lequel on dispose l'élément chauffant (6) extrait dans un conteneur de manutention à l'intérieur du réservoir avant d'extraire l'élément chauffant (6) du réservoir.

13. Outillage d'extraction d'un élément chauffant (6) d'un pressuriseur (2) maintenu dans un réservoir (4) du pressuriseur (2) par au moins une plaque-entretoise (8, 10), comprenant un outil de découpe par électroérosion (42) comportant un châssis de support (44), l'outillage est **caractérisé en ce qu'**il comprend une électrode (46) d'électroérosion tubulaire portée par un porte-électrode (47) monté coulissant sur le châssis de support (44) pour enfiler l'électrode (46) autour de l'élément chauffant (6) et découper une plaque-entretoise autour de l'élément chauffant (6).

14. Outillage selon la revendication 13, dans lequel l'outil de découpe (42) comprend un dispositif de saisie (48) propre à saisir un élément chauffant (6) s'étendant à l'intérieur du porte-électrode (47).

15. Outillage selon la revendication 13 ou 14, comprenant une embase (43) de positionnement et de fixation de l'outil de découpe (42) sur une plaque-entretoise (10), permettant de positionner l'outil de découpe (42) en utilisant comme points de références des éléments chauffants adjacents à l'élément chauffant endommagé et/ou des orifices de circulation d'eau au travers de la plaque-entretoise (10).

16. Outillage selon l'une quelconque des revendications 13 à 15, comprenant un organe de fixation (80) pour la fixation de l'outil de découpe (42) sur une plaque-entretoise (10), l'organe de fixation (80) comprenant un corps (82) prévu pour être inséré dans des orifices alignés de deux pièces (66, 10), une collerette d'appui (83) et un doigt de serrage (84) rétractable mobile entre une position rentrée à l'intérieur du corps (82) et une position sortie en saillie à l'extérieur du corps (82) sous l'effet d'un élément de serrage (92) de manière à serrer les pièces (66, 10) traversées par le corps (82) entre la collerette (83) et le doigt de serrage (84).

## Patentansprüche

1. Verfahren zum Eingreifen bei einem defekten Heizelement (6) eines Druckhalters (2), der aufweist einen Behälter (4), der entlang einer Längsachse (L) langgestreckt ist, und langgestreckte Heizelemente (6), die sich im Inneren des Behälters (4) erstrecken, und wenigstens eine Stützplatte (8, 10), die von den Heizelementen (6) durchdrungen ist und die in der Lage ist, einen Querabstand zwischen den Heizelementen (6) aufrechtzuerhalten,
**dadurch gekennzeichnet, dass**
wenigstens eine Stützplatte (8, 10) um das Heizelement (6) herum aufgeschnitten wird, um dieses Heizelement (6) von der besagten Stützplatte (8, 10) zu trennen, wobei danach das Heizelement (6) aus dem Behälter (4) entnommen wird.

2. Verfahren gemäß Anspruch 1, wobei das Heizelement in einem Stück entnommen wird.

3. Verfahren gemäß Anspruch 1 oder 2, wobei das Heizelement (6) entnommen wird durch Ziehen an einem oberen Endabschnitt des Heizelements (6) und/oder durch Drücken an einem unteren Endabschnitt des Heizelements (6), bevorzugt an einem unteren Abschnitt, der sich durch eine Wand des Behälters (4) hindurch zur Außenseite des Behälters (4) erstreckt.

4. Verfahren gemäß irgendeinem der Ansprüche 1 bis 3, wobei die oder jede Stützplatte (8, 10) aufgeschnitten wird mit Hilfe eines Elektroerodier-Schneidwerkzeugs (42), welches aufweist einen Elektroerodier-Kopf (45) und eine Elektroerodier-Elektrode (46).

5. Verfahren gemäß Anspruch 4, wobei die Elektrode (46) um das Heizelement (6) herum übergestreift wird und die Elektrode (46) abwärtsbewegt wird, um die oder jede Stützplatte um das Heizelement (6) herum aufzuschneiden.

6. Verfahren gemäß Anspruch 4 oder 5, wobei das Schneidwerkzeug (42) an einer Stützplatte (10) fixiert wird durch Positionieren des Schneidwerkzeugs (42) mittels Verwendens von Heizelementen, die zu dem zu entnehmenden Heizelement (6) benachbart sind, und/oder von Wasserzirkulations-Öffnungen (26) zur Zirkulation von Wasser durch die oder jeder Stützplatte (8, 10) hindurch als Referenzpunkte.

7. Verfahren gemäß irgendeinem der Ansprüche 4 bis 6, wobei die Elektrode (46) rohrförmig ist.

8. Verfahren gemäß irgendeinem der vorhergehenden Ansprüche, wobei das Heizelement (6) getrennt wird von einer Hülse zur Durchführung des Heizelements durch eine Wand des Behälters (4) hindurch zur Außenseite des Behälters (4).

9. Verfahren gemäß irgendeinem der vorhergehenden Ansprüche, wobei ein Ersatz-Heizelement (6) platziert wird zum Ersatz des entnommenen Heizelements (6).

10. Verfahren gemäß Anspruch 9, wobei das Heizelement an der besagten Stützplatte fixiert wird mit Hilfe eines Plattenstücks, das an die Stützplatte herangebracht und daran fixiert wird und das eine Öffnung zur Durchführung des Ersatz-Heizelements aufweist.

11. Verfahren gemäß Anspruch 10, wobei das Plattenstück (94) positioniert wird durch Verwenden von Heizelementen (6), die zu dem Ersatz-Heizelement (6) benachbart sind, und/oder von Wasserzirkulations-Öffnungen durch die oder jede Stützplatte (8, 10) hindurch als Referenzpunkte.

12. Verfahren gemäß irgendeinem der vorhergehenden Ansprüche, wobei das entnommene Heizelement (6) im Inneren des Behälters in einem Transportbehältnis angeordnet wird, bevor das Heizelement (6) aus dem Behälter entnommen wird.

13. Werkzeug zur Entnahme eines Heizelements (6) von einem Druckhalter (2), das in einem Behälter (4) des Druckhalters (2) gehalten ist mittels mindestens einer Stützplatte (8, 10), aufweisend ein Elektroerodier-Schneidwerkzeug (42), das ein Traggestell (44) aufweist, wobei das Werkzeug **dadurch gekennzeichnet ist, dass** es aufweist
eine rohrförmige Elektroerodier-Elektrode (46), die von einem Elektroden-Träger (47) getragen ist, der an dem Traggestell (44) verschiebbar angebracht ist zum Überstreifen der Elektrode (46) um das Heizelement (6) herum und Aufschneiden einer Stützplatte um das Heizelement (6) herum.

14. Werkzeug gemäß Anspruch 13, wobei das Schneidwerkzeug (42)
eine Greifvorrichtung (48) aufweist, die in der Lage ist, ein Heizelement (6) zu greifen, das sich im Innern des ElektrodenTrägers (47) erstreckt.

15. Werkzeug gemäß Anspruch 13 oder 14, aufweisend eine Basis (43) zur Positionierung und zur Fixierung des Schneidwerkzeugs (42) an einer Stützplatte (10), erlaubend ein Positionieren des Schneidwerkzeugs (42) durch Verwenden von Heizelementen, die zu dem beschädigten Heizelement benachbart sind, und/oder von Wasserzirkulations-Öffnungen durch die Stützplatte (10) hindurch als Referenzpunkte.

16. Werkzeug gemäß irgendeinem der Ansprüche 13 bis 15, aufweisend eine Fixierorgan (80) für die Fixierung des Schneidwerkzeugs (42) an einer Stützplatte (10), wobei das Fixierorgan (80) aufweist einen Körper (82), der vorgesehen ist um in fluchtende Öffnungen zweier Stücke (66, 10) eingesetzt zu werden, einen Auflage-Ringbund (83) und einen einrückbaren Einspannfinger (84), der zwischen einer Position des Eingerückt-Seins ins Innere des Körpers (82) und einer Position des Vorspringens zur Außenseite des Körpers (82) bewegbar ist unter der Wirkung eines Spannelements (92), um die Stücke (66, 10), die von dem Körper (82) durchdrungen sind, zwischen dem Ringbund (83) und dem Einspannfinger (84) einzuspannen.

## Claims

1. A method for working on a defective heating element (6) of a pressuriser (2) comprising a tank (4) elongated along a longitudinal axis (L) and elongate heating elements (6) extending within the tank (4), and at least one spacer plate (8, 10) through which the heating elements (6) pass and which is capable of maintaining a transverse spacing between the heating elements (6),
**characterized in that** at least one spacer plate (8, 10) is cut around the heating element (6) so as to detach said heating element from said spacer plate (8, 10), and then the heating element (6) is extracted from the tank (4).

2. A method according to claim 1, wherein the heating element is extracted in one single piece.

3. A method according to claim 1 or 2, wherein the heating element (6) is extracted by pulling on an upper end portion of the heating element (6) and / or by pushing on a lower end portion of the heating element (6), preferably with a lower end portion extending through a wall of the tank (4) and out to the exterior of the tank (4).

4. A method according to any one of claims 1 to 3, wherein the or each spacer plate (8, 10) is cut by means of an electrical discharge cutting tool (42) comprising an electrical discharge head (45) and an electrical discharge electrode (46).

5. A method according to claim 4, wherein the electrode (46) is slipped around the heating element (6) and then the electrode (46) is lowered in a manner so as to cut the or each spacer plate around the heating element (6).

6. A method according to claim 4 or 5, wherein the cutting tool (42) is fastened onto a spacer plate (10) by positioning the cutting tool (42) while using as reference points the heating elements adjacent to the heating element (6) to be extracted and / or water circulation openings (26) for the circulation of water through the or each spacer plate (8, 10).

7. A method according to any one of claims 4 to 6, wherein the electrode (46) is tubular.

8. A method according to any one of the preceding claims, wherein the heating element (6) is detached from a through passage sleeve of the heating element through a wall of the tank (4) on the exterior of the tank (4).

9. A method according to any one of the preceding claims, wherein a replacement heating element (6) is positioned in place at the location of the extracted heating element (6).

10. A method according to claim 9, wherein the heating element is fixed to said spacer plate by means of a section of plate that is attached and fastened to the spacer plate and includes a through opening for passage of the replacement heating element.

11. A method according to claim 10, wherein the section of plate (94) is positioned by using as reference points the heating elements (6) adjacent to the replacement heating element (6), and / or the openings for circulation of water through the or each spacer plate (8, 10).

12. A method according to any one of the preceding claims, wherein the extracted heating element (6) is disposed in a handling container inside the tank prior to extracting the heating element (6) from the tank.

13. A tool apparatus for extracting a heating element (6) of a pressuriser (2) held in place in a tank (4) of the pressuriser (2) by at least one spacer plate (8, 10), comprising an electrical discharge cutting tool (42) including a support frame (44) and a tubular electrical discharge electrode (46) carried by an electrode holder (47) mounted in a slidable manner on the support frame (44), for slipping the electrode (46) around the heating element (6) and cutting a spacer plate around the heating element (6).

14. A tool apparatus according to claim 13, wherein the cutting tool (42) comprises of a gripping device (48) capable of gripping a heating element (6) extending into the interior of the electrode holder (47).

15. A tool apparatus according to claim 13 or 14, comprising a base (43) for positioning and fastening the cutting tool (42) onto a spacer plate (10), making it possible to position the cutting tool (42) while using as reference points the heating elements adjacent to the damaged heating element and / or the openings for the circulation of water through the spacer plate (10).

16. A tool apparatus according to any one of claims 13 to 15, comprising a fastening member (80) for fastening of the cutting tool (42) on to a spacer plate (10), the fastening member (80) comprising of a body (82) adapted to be inserted into the aligned openings of two parts (66, 10), a support flange (83) and a retractable clamping finger (84) movable between a retracted position in the interior of the body (82) and an extended position projecting out to the exterior of the body (82) under the effect of a clamping element (92) in a manner so as to clamp together the parts (66, 10) through which the body (82) passes between the flange (83) and the clamping finger (84).
